(19)

Europäisches
Patentamt
European
Patent Office
Office européen
des brevets

(11) **EP 3 296 889 A1**

(12) # EUROPEAN PATENT APPLICATION

(43) Date of publication:
**21.03.2018 Bulletin 2018/12**

(51) Int Cl.:
***G06F 17/30*** *(2006.01)*

(21) Application number: **16189605.5**

(22) Date of filing: **20.09.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ALE INTERNATIONAL
92700 Colombes (FR)**

(72) Inventors:
• **HELBERT, Emmanuel
  67140 ANDLAU (FR)**

• **TRINITE, Benoit
  78360 MONTESSON (FR)**
• **NOGUEIRA, Georges
  67300 SCHILTIGHEIM (FR)**
• **WOLFF, Christophe
  67230 BENFELD (FR)**

(74) Representative: **Therias, Philippe et al
PHIIP Avocat
C/o Bignon Lebray
75, rue de Tocqueville
75017 Paris (FR)**

Remarks:
Amended claims in accordance with Rule 137(2)
EPC.

(54) **SERVICE DISTRIBUTION INFRASTRUCTURE**

(57)     The invention provides a service distribution infrastructure comprising a plurality of tags (1) and a data distribution server (4) storing data elements in association with tag identifiers and application identifiers,
the data distribution server (4) being configured to receive a data distribution request (13) from a requesting communication device (19), wherein the data distribution request (13) comprises the tag identifier (10) and ant application module identifier (11),
the data distribution server (4) being configured to retrieve the data element (8) associated with both the tag identifier (10) and the application module identifier (11).

FIG.3

EP 3 296 889 A1

# Description

The invention relates generally to a service distribution infrastructure

## Background

Secured passive tags are known in which information is stored in Read-Only-Memory (ROM) or in rewritable memories (RAM, Flash memories). Dedicated applications may use the content of such tags. However, the content may not be changed, even if applications are changed and updated or new applications want to use the tag with a different content, because the storage medium is not rewritable or because it requires an expensive workload to re-configure manually all tags.

## Summary

An idea at the basis of the invention is to provide a fleet of tags in which a plurality of application modules may store data elements in a secured way. An idea at the basis of the invention is to provide a fleet of tags for accessing flexible stored content.

In an embodiment, the invention provides a service distribution infrastructure comprising:

- a plurality of tags, each tag of the plurality comprising a tag identifier and a logical network address of a distribution data repository, each tag being able to produce an identification tag signal comprising the tag identifier and the logical network address of a distribution data repository,
- a data distribution server comprising:

  o a data processing unit,
  o a network interface, and
  o the distribution data repository, wherein the distribution data repository stores a plurality of tag identifiers and a plurality of application module identifiers,

the distribution data repository further storing data elements, each data element being stored in association with a tag identifier and an application module identifier, a first data element being stored in association with a tag identifier and a first application module identifier, and a second data element being stored in association with the tag identifier and a second application module identifier, the network interface being configured to receive a data distribution request from a requesting communication device, wherein the data distribution request comprises a tag identifier and a module identifier, wherein the data processing unit is configured to retrieve a data element as a function of the application module identifier and tag identifier in response to receiving the data distribution response,

the network interface being further configured to send a data distribution response to the requesting communication device, wherein the data distribution response comprises the retrieved data element, such that the requesting communication device gets the data element to be processed, wherein the data processing unit is configured to retrieve the first data element in response to receiving a data distribution request comprising the tag identifier and the first application module identifier, the data processing unit is configured to retrieve the second data element in response to receiving a data distribution request comprising the tag identifier and the second application module identifier.

According to embodiments, such a service distribution infrastructure may comprise one or more of the features below.

The kind of data element may be various. For example, a data element may be a data unit or a complex data set.

Data elements relating to different application module identifiers may be of a different nature. For example, a data element may comprise one or more of the following:

a Vcard, a network location information of a communication device or a service provider infrastructure, a uniform resource locator (URL), a voice, musical or video recording, a picture, a text, a map.

The data element may comprise contextual information in relation with the geographical location of the tag or with a virtual or physical object associated with the tag.

For example, the tag may be arranged near a deskphone, for example arranged on or in the deskphone, and data elements stored in the distribution data repository in association with the tag identifier may comprise: the phone number of the deskphone, and a network location information of a call switching service, the Vcard of the owner of the deskphone, a directory.

For example, the tag may be arranged near an artwork in a museum, and data elements stored in the distribution data repository in association with the tag identifier may comprise: the map of the museum, a text relating to the artist or to the artwork, a network location information of a record relating to the artwork.

For example, the tag may be arranged on an armband of a patient or in a subdermal implant, and data elements stored in the distribution data repository in association with the tag identifier may comprise: the map of an hospital where the patient is cured, a record of the identity and address of the patient, a network location information of a record relating to the medical file of the patient.

For example, the tag may be arranged on a dog collar or on a prison inmate tracker, and data elements stored in the distribution data repository in association with the tag identifier may comprise the identity and a medical file, legal file etc.

As employed herein, the tag denotes a digital or analogical physical media carrying the tag identifier and the logical network address of the distribution data repository. As employed herein, the identification tag signal denotes a digital or analogical signal carrying the tag identifier and the logical network address from the tag to the tag reader, e.g. in any coding format and any modulation format.

The tag may be selected from various active and passive tag technologies. In an embodiment, the passive tag is sheet on which the tag identifier is printed. The identity of the tag or tag identifier may be printed in a symbolical or graphical coding format, e.g. as a barcode, for example a two dimensional barcode, or as a Quick Response (QR) code. In embodiments, the tag includes a digital memory containing the tag identifier coupled to an infrared or radio transmitter adapted to emit an infrared or radio identification tag signal carrying the tag identifier stored in the digital memory. In embodiments, the digital memory further contains a signature of the tag identifier, and optionally a tag location information. Such embodiments may be implemented with a passive transmitter, without its own power source, e.g. a Near Field Communication (NFC) tag, or an Ultra High Frequency (UHF) tag.

In an embodiment, the digital memory comprises a Read-Only-Memory in which is stored the tag identifier. Thanks to this feature, the tag identifier is not modifiable. In an embodiment, the digital memory also comprises a second memory, for example a Random Access Memory (RAM) in which is stored any information in relation with the tag. For example, the tag identifier and other information stored are registered in a same numerical format.

In an embodiment, the tag is an active tag, comprising a broadcasting module for broadcasting an identification tag signal carrying the tag identifier, wherein the identification tag signal is broadcasted in a short range area around the tag.

the data processing unit is further configured to receive a registration request from a registering application module through the network interface, the data processing unit being configured to:

- generate an application module identifier associated with the registering application module,
- send the application module identifier to the registering application module,
- receive a storing request, the storing request comprising a tag identifier, the storing request further comprising the application module identifier and a data element to be stored in relation with the tag identifier and the application module identifier,
- store into the distribution data repository the data element in relation with the tag identifier and the application module identifier.

Thanks to these features, a tag identifier enables accessing a flexible and extensible distribution data repository in which new data elements may be stored in relation with the tag identifier.

The registration request may comprise a network address of the service distribution infrastructure.

In embodiments, the tag is a NFC tag comprising:

- a digital memory containing the tag identifier, a signature of the tag identifier and a network address of the service distribution infrastructure,
- an infrared or radio transmitter adapted to emit an infrared or radio identification tag signal carrying the tag identifier and the signature stored in the digital memory.

In embodiments, the network address of the service distribution infrastructure is a NDEF record as AAR or URL. In an embodiment, the network address of the service distribution infrastructure is a Full Qualified Domain Name (FQDN).

There are many application modules that may register to the service distribution infrastructure and many kind of data element that may be stored.

For example, the data element is a record, for example a Vcard, a map, a picture, or a text and the data processing unit is configured to display or to record on the communication device the Vcard, the map, picture or text.

For example, the data element is a voice, a music or a video recording and the data processing unit is configured to run on the communication device the voice, a music or a video recording.

In embodiments, the data element comprises a network address of a target communication device and the registered application module identifier identifies an application module configured to switch a communication session which is previously established between the requesting communication device and a third party communication device from the requesting communication device to the target communication device such that the switched communication session is established between the third party communication device and the target communication device.

For example, the network address may be a Uniform Resource Identifier (URI) or a phone number in a canonical format.

In a preferred embodiment, the network address of the target communication device is registered in a communication system.

In embodiments, the distribution data repository further stores a public key adapted to check the validity of the signature of the tag identifier.

The public key is a part of an asymmetric algorithm key pair comprising a private key and a public key. The private key is used to compute the signature while the public key enables encryption of the signature of the tag identifier. In other words, the public key is used by the application module to check the authenticity and integrity of the data element stored in relation with the tag.

In an embodiment, the service distribution infrastructure further comprises a tag registration module configured to receive a tag registration request from a provisioning application, wherein the tag registration request comprises a tag identity, the data registration module being configured to:

- generate a signature associated with the tag identity,
- send a tag registration response to the provisioning application, wherein the tag registration response comprises the generated signature,
- store in the service distribution infrastructure the tag identity in association with the generated signature.

In embodiments, the signature of the tag identifier is generated using an asymmetric algorithm applied on a result issued from a primary cryptographic function of the tag identifier and optionally, of other elements. For example, the asymmetric algorithm is a GNU Privacy Guard (GPG) algorithm.

The result issued from the primary cryptographic function is also referred to as a hashcode.

In embodiments, the generated signature of the tag is computed by a private key applied to a hashcode calculated on data stored in the digital memory of the tag. In an embodiment, the calculation is performed thanks to an asymmetric key technique such as Rivest-Shamir-Adleman (RSA) or Elliptic Curve techniques.

In embodiments, the data processing unit is further configured to send the public key to the registering application module.

In embodiments, the distribution data repository further stores tag location information in association with a tag identifier.

In an embodiment, the service distribution infrastructure also comprises a deployment device, the deployment device comprising a tag identifier discovery module configured for discovering a tag identifier of a tag to be deployed, the deployment device being further configured for:

- sending the tag registration request to the tag registration module and receiving the tag registration response,
- storing the generated signature in a digital memory of the tag to be deployed.

Different kind of tag identifier discovery modules may be used. In an embodiment, the tag identifier discovery module is a tag reader configured for reading a tag signal from the tag to be deployed, wherein the tag signal comprises the tag identity of the tag to be deployed. In an embodiment, the tag identifier discovery module comprises storage means comprising records of a number of tag identifiers.

The invention also provides a communication system comprising the service distribution infrastructure described hereinabove and a communication device comprising:

a tag reader configured to:

- read an identification tag signal comprising an identity of a tag,

an application module comprising:

- a memory in which is stored an application module identifier,
- a data processing unit,

a data distribution module configured to:

- send a data distribution request to the registration service infrastructure, wherein the data distribution request comprises the identity of the tag and the application module identifier,
- receive a data distribution response from the registration service infrastructure, the data distribution response comprising a data element in relation with the identity of the tag and the application module identifier,

the data processing unit being configured to process the data element, wherein the data distribution module of the communication device and the network interface of the service distribution infrastructure are configured to communicate with each other.

In an embodiment, the data processing unit is configured to check that the identity of the tag and the application module identifier received from the data distribution request are authenticated before sending the data distribution response.

In embodiments, the application module is a first application module, and the application module identifier is the first application module identifier, the data processing unit is a first data processing unit, the data distribution request is a first data distribution request and the data distribution response is a first data distribution response, the communication device further comprising:

a second application module comprising:

- a memory in which is stored the second application module identifier,
- a second data processing unit,

the data distribution module being further configured to:

- send a second data distribution request to the registration service infrastructure, wherein the data distribution request comprises the identity of the tag and the second application module identifier,

- receive a second data distribution response from the registration service infrastructure, the data distribution response comprising a second data element in relation with the identity of the tag and the second application module identifier,

the second data processing unit being configured to process the second data element.

They are various communication devices which can be used. For example, the communication device is a mobile phone. For example, the communication device is a digital tablet or any computer device adapted to communicate through VoIP or Skype communication sessions.

In embodiments, the communication device is the requesting communication device, wherein the first data element being stored in association with the tag identifier and with the first application module identifier comprises the network address of a target communication device, and the first application module is configured to switch an communication session which is previously established between the requesting communication device and a third party communication device from the requesting communication device to the target communication device such that the switched communication session is established between the third party communication device and the target communication device, wherein the tag is located in, on or at a short distance from the requesting communication device.

Short distance refers to a distance lower than a short walk for a user to access a target communication device after the user scanned the identification tag thanks to the requesting communication device, e.g. less than 20 meters, preferably less than 10 meters, more preferably less than 10 centimeters. In an embodiment, the tag is embedded in the target communication device.

In embodiments, the second application module identifier identifies a second application module which is configured to display and record a Vcard on the initial communication device. The second data element is stored in association with the tag identifier and with the second application module identifier comprises the Vcard.

There are various optical and radio technologies that may be used for reading the identification tag signal, for example optical camera with image processing capabilities, e.g. QR code readers, infrared receivers, Bluetooth receivers, NFC readers, e-Beacon receivers, ZigBee receivers, or Wi-Fi receivers, or any Radio Frequency Identification (RFID) transceivers.

In an embodiment, the tag reader comprises an optical camera with image processing capabilities for reading an image.

In an embodiment, the tag reader comprises a receiver for receiving the identification tag signal as a modulated electromagnetic signal.

In an embodiment, the tag reader comprises a radio transceiver for reading a passive Radio Frequency Identifier tag.

They are various communication devices which can be used. For example, the communication device is a mobile phone. For example, the communication device is a digital tablet or any computer device adapted to communicate through VoIP or Skype communication sessions.

In embodiments, the communication device further comprises

- applying an asymmetric cryptographic function on at least a part of the data element contained in the tag in order to check content authenticity and integrity using the public key embedded in an application module,
- extracting the tag identifier and other relevant data contained in the tag in order to sending the data distribution request to the service distribution infrastructure for getting the data element.

In embodiments, the communication device further comprises

- applying a cryptographic function on the signature of the tag in order to get a calculated encrypted signature,
- comparing the calculated encrypted signature to the identity of the tag in order to sending the data distribution request to the service distribution infrastructure for getting the data element.

Thanks to these features, the authenticity of the tag and the integrity of the information stored in the tag are ensured. Thanks to these features, the communication device may also check that the application module is a subscriber of the service distribution infrastructure.

The cryptographic function may be various. For example, the cryptographic function is an asymmetric cryptographic function.

For example, the calculated signature of the tag is computed with a private key on a hashcode calculated from the data contained in the tag, with an asymmetric key technique such as RSA or Elliptic Curve techniques.

In embodiments, the data distribution request is a HyperText Transfer Protocol (HTTP) over TLS (HTTPS) request and the registration service infrastructure comprises a web server. In an embodiment, the HTTP request is sent over a Transport Layer Security (HTTPS) request.

In embodiments, the tag signal further comprises a NFC data exchange format (NDEF) record as Android application record (AAR) or URL.

In embodiments, the tag signal further comprises a network address of a web server in which is stored program instructions of an application module, the communication device further comprising a memory, and processing means,
the communication device being further configured to:

- send a request to the web server for receiving the program instructions,

- receive the program instructions from the server,

- store in the memory the program instructions in order that the communication device comprises the application module,

- execute, by the processing means, the program instructions of the application module.

Thanks to these features, the communication device may download and execute the application module which relates to the tag.

**Brief description of the drawings**

These and other aspects of the invention will be apparent from and elucidated with reference to the embodiments described hereinafter, by way of example, with reference to the drawings.

- Figure 1 schematically illustrates the creation and deployment of an NFC tag in a service distribution infrastructure;
- Figure 2 schematically illustrates the registration of an application module to the service distribution infrastructure;
- Figure 3 schematically illustrates the registration of an application module to a tag of the service distribution infrastructure;
- Figure 4 schematically illustrates the registration of an application module to a bunch of tags of the service distribution infrastructure;
- Figure 5 schematically illustrates the distribution of a data element to a communication device;
- Figure 6 schematically illustrates a method performed by the communication device in order that the service distribution infrastructure distributes the data element according to Figure 5;
- Figure 7 illustrates a table comprising the data elements recorded in a distribution data repository of the service distribution infrastructure;
- Figure 8 schematically illustrates a call switch enabled by a communication device performing the method of Figure 6 in order to retrieve a data element stored in the table of Figure 7;
- Figure 9 schematically illustrates a computing device.

**Detailed description of the embodiments**

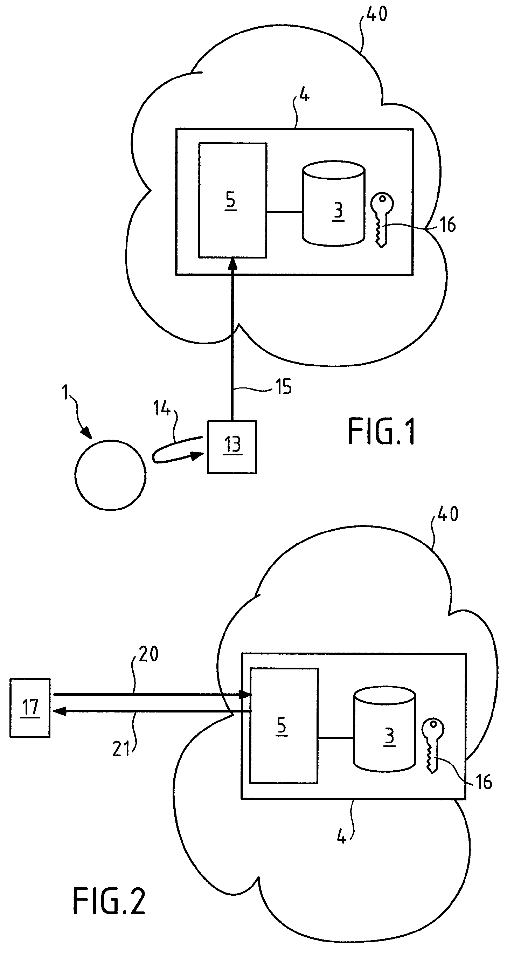

A service distribution infrastructure of a NFC service provider is used for distributing data elements stored in relation with a respective tag.
With reference to Figure 1, the creation and the deployment of a fleet of tags will be described.
The service distribution infrastructure comprises a data distribution server 4 and the fleet of created tags. For the sake of illustration, a tag 1 is pictured on Figure 1. The data distribution server 4 comprises a data processing unit 5 and a distribution data repository 3 as illustrated.
The data distribution server 4 belongs to a communication network 40, which may be implemented with a number of different transport media (wired, wireless, optical fiber, cable) and transport protocols (IP, Ethernet, MPLS and others) in manner known per se. The network address of the data distribution server 4 is a URL.
For the sake of clarity, the tags are numbered in the description. The tag X is the $X^{th}$ tag. The tag 1 is the first tag.

**Creation of the fleet of tags:**

The creation of the fleet of tags is performed as follow.
The tag X is a passive NFC tag comprising a digital memory and a radio transmitter adapted to emit a radio identification tag signal carrying information stored in the digital memory when receiving a magnetic flux from a tag reader. Such tags are known per se and may be purchased from manufacturers.
The digital memory is a Read Only Memory (ROM).
The digital memory of a tag X is first configured by a manufacturer. For example, the tag manufacturer is the NFC service provider or a different entity. However, the security is enhanced when the NFC service provider manufactures its own tags.
For that purpose, a tag identity TagID_x is generated. For example, TagID_x is generated from the serial number of the digital memory.
The identity of the tag X is secured using known asymmetrical algorithms, as described below. A private key and the corresponding public key 16 are also generated. The private key 16 is securely stored in the data distribution server 4. The public key is made available to an application module after registration. The public key is embedded in the application module and must not be easily modifiable by a third party. The private key is used in the generation of a signature of the tag identifier as follow.
A signature sig_x of the tag identity TagID_x is generated by firstly applying a hash function H to both the tag identity and the URL, and secondly applying an asymmetric cryptographic function using the private key to the result of the hash function. For instance the hash function SHA256 from the SHA2 hash family functions.

$$sig\_x = Crypt_{\text{private key}}(H(TagID\_x, URL))$$

The signature ensures that the tag x is generated by the NFC service provider, in order to protect the data distribution server 4 from addition of illegitimate tags, and to protect users from being misled about the belonging of a tag to the data distribution server 4. For example, an illegitimate tag could be forged manually for malicious purposes, for instance, for redirecting the application module 17 to a premium rate service without the consent of the user by recording a premium rate service URL in the illegitimate tag.

The tag identity TagID_x, the signature sig_x and the URL are then stored in the digital memory. For example, the digital memory is a ROM and the manufacturer has stored the tag identity, the signature and the URL in the ROM. In the case where the digital memory is a ROM, the configuration of the tag memory is unmodifiable, which enhances the security. In the case the digital memory is split in two memory fields, one being a ROM and one being modifiable (such as Flash memories), at least one element of the configuration, for instance the tag identity TagID_x, must be stored in the ROM.

The digital memory and the radio transmitter are connected and embedded in a body, for example in a plastic body, to complete the manufacturing of the tag.

The tag thus contains signed public information, i.e. a clear tag identifier TagID_x, a clear URL of the data distribution server 4, and the signature of the tag sig_x.

**Deployment of the fleet of tags:**

The tags are arranged on, in or near different objects. In particular, a tag may either be affixed or attached on the object or embedded in the object or located near the object. For example, the tags are arranged or embedded in deskphones, or arranged on dog collars, on hospital beds or near artworks.

A deployment device 13 is then used for registering the tags.

The deployment device 13 comprises a tag reader for reading an identification tag signal 14 carrying the tag identifier TagID_x and the signature of the tag identifier sig_x.

The deployment device 13 also comprises a memory in which is stored the public key 16 and the URL of the data distribution server 4.

The deployment device 13 also comprises a deployment application configured to check the validity of the signature sig_x by applying the public key 16 on the signature and by comparing the result to the tag identifier.

The deployment application generates contextual information about the tag. For example, the deployment application generates the geographical location of the tag, for example Global Positioning System coordinates. The contextual information may also comprise the type of use of the tag, for example a deskphone tag or a dog collar tag.

The deployment device then sends a deployment request 15 to the data distribution server 4. The deployment request 15 comprises the tag identifier TagID_x and the generated contextual information as well as the data element that will be stored in the tag in addition to the tag identifier TagID_x.

The data processing unit 5 of the data distribution server 4 then stores in the distribution data repository 3 the tag identifier TagID_x in association with the generated contextual information, the data element stored in the tag and the signature computed with the private key hosted securely in the data processing unit.

Each tag of the fleet is registered by a deployment device 13 as described hereinabove.

For example, the distribution data repository 3 may store a tag identifier table as follow:

| Tag Identifier | Contextual information | |
|---|---|---|
| | **Location** | **Type** |
| TagID1 | Paris | Deskphone tag |
| TagID2 | Paris | Hospital bed |
| TagID3 | Toronto | Dog Collar |
| TagID4 | Paris | Deskphone tag |
| ... | | |
| TagIDx | New York | Deskphone tag |

**Registration of application modules to the service distribution infrastructure**

Figure 2 illustrates the registration of an application module 17 to the service distribution infrastructure.

The application module 17 comprises program instructions recorded on the memory of a communication device configured for executing the instructions. The communication device is for example a computer, or a smartphone 19.

The application module 17 sends a registering request 20 to the data distribution server 4. In response to receiving the registering request 20, the data distribution server 4 generates an application module identifier AppID_x.

Then, the data distribution server 4 sends a registration response 21 to the application module 17. The registration response 21 comprises the generated application module identifier AppID_x and the public key 16.

Once the application module 17 is provided with an application module identifier AppID_x, here AppID_1, the application module 17 may register to one or more tag from the fleet of tags.

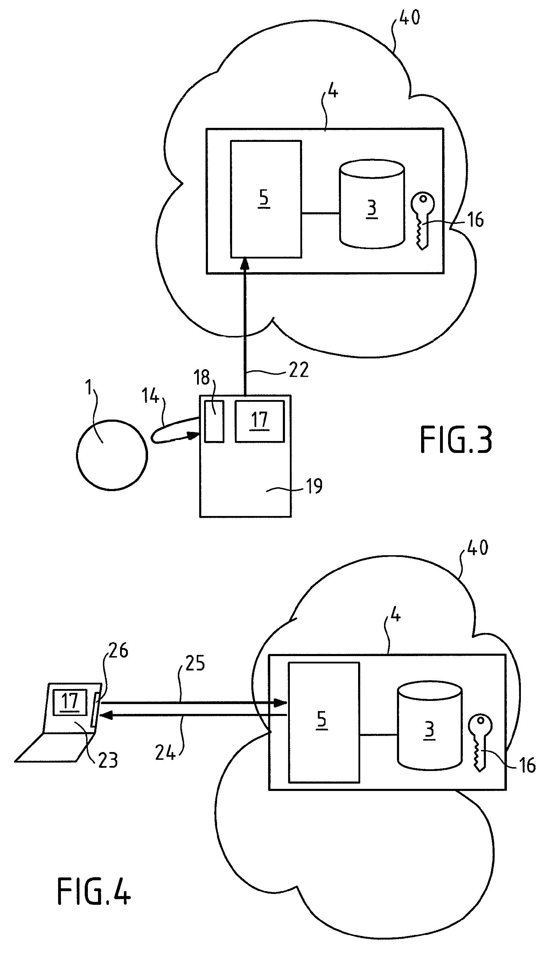

The registration of the application module 17 to tags of the service distribution infrastructure may be by performed on a tag-per-tag basis, as described on Figure 3.

Figure 3 pictures an example of registration of an application module 17 to the service on a tag-per-tag basis. In the example of Figure 3, the communication device comprising the application module 17 is a smartphone 19.

The smartphone 19 comprises a tag reader 18. The tag reader 18 reads the identification tag signal 14 which comprises the tag identifier TagID_1, the URL and the signature sig_1.

The application module 17 is configured to first check the validity of the signature to ensure that the tag is part of the tag fleet of the data distribution server 4.

Checking the validity of the signature sig_1 is performed as follows:

The application module 17 applies the asymmetric cryptographic function using the public key on the signature sig_x then compares the result to the hashed tag identifier TagID_x and URL in order to test equality between both.

Therefore, the integrity of the tag identifier is ensured.

The application module 17 is further configured to, in response to ensuring the validity of the tag 1, generate a data element comprising contextual information in relation with the tag. For example, the tag is arranged on a deskphone and the application module 17 is configured to generate a data element comprising the phone number of the deskphone.

The application module 17 is further configured to send a data recording request 22 to the data distribution server 4. The data recording request 22 comprises the tag identifier TagID_1, the application module identifier AppID_1 and the data element.

The data processing unit 5 of the data distribution server 4 is configured to read the application module identifier AppID_1 and to check if the application module identifier AppID_1 is stored in the distribution data repository 3, i.e. if the application module 17 is a subscriber of the service. This check is made possible by comparing the application module signature given by an application store where this application has been made available and the application module signature stored during application module registration when exchanging registration request 20 and registration response 21.

The data distribution server 4 is configured to store the data element in the distribution data repository 3 in relation with the tag identifier TagID_1 and the application module identifier.

The communication device, for example the smartphone 19, comprising the application module 17 performs the above described method for each tag to be subscribed which is part of the fleet of tag in order to record data elements in the distribution data repository 3.

The above-described method is about the registration of an application module 17 to tags which are part of the deployed fleet of tag on a tag-per-tag basis.

A method enabling registration of an application module 17 of a bunch of tags at once will now be described with reference to Figure 4.

The application module 17 is embedded in a communication device, for example in a computer 23.

The computer 23 comprises a communication interface 26 in order that the application module 17 may send a tags subscription request (not represented) to the distribution data server 4.

If registered, the application module 17 receives in response a TagsBunch request 24. The TagsBunch request 24 comprises the tag identifier table above described.

The application module 17 is configured to select tag identifiers on the basis of the location or type associated.

For example, the application module 17 selects all the tag identifiers associated with the geographical location "Paris" and the type "Deskphone tag". All the tag identifiers associated with the geographical location "Paris" and the type "Deskphone tag" constitute a bunch of tags of the fleet of tags. In the example of the tag identifier table above described, the bunch of tags namely comprises the tag identifiers TagID_1 and TagID_4.

The application module 17 generates a data element for each of the selected tag identifier.

The application module 17 sends to the distribution data server 4 a TagBunch response 25 comprising the application module identifier AppID_1, the selected tag identifiers and the associated data elements.

The distribution data server 4 stores the data elements in the distribution data repository 3 in association with the selected tag identifiers and the application module identifier AppID.

The registration of the application module as described may be performed by different application modules to same tags.

For example, the application module identifier AppID_1 of the application module 17 is registered with the bunch of tags. The data elements stored in the distribution data repository 3 in association with the application module identifier AppID_1 and with the tag identifiers TagID_x are phone number of the deskphones. A second application module identifier AppID_2 of a second application module is registered with the same bunch of tags. The data elements stored in the distribution data repository 3 in association with the application module identifier AppID_2 and with the tag identifiers TagID_x are Vcards of the owner of the deskphones.

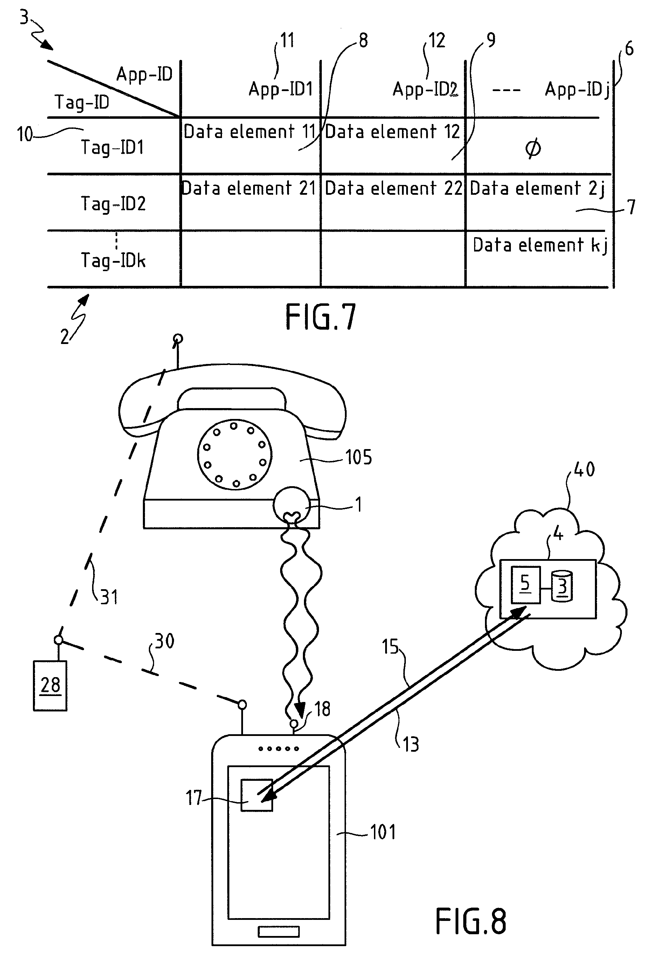

For example, the distribution data repository 3 comprises the table pictured on Figure 7.

**Distribution of data elements by the service:**

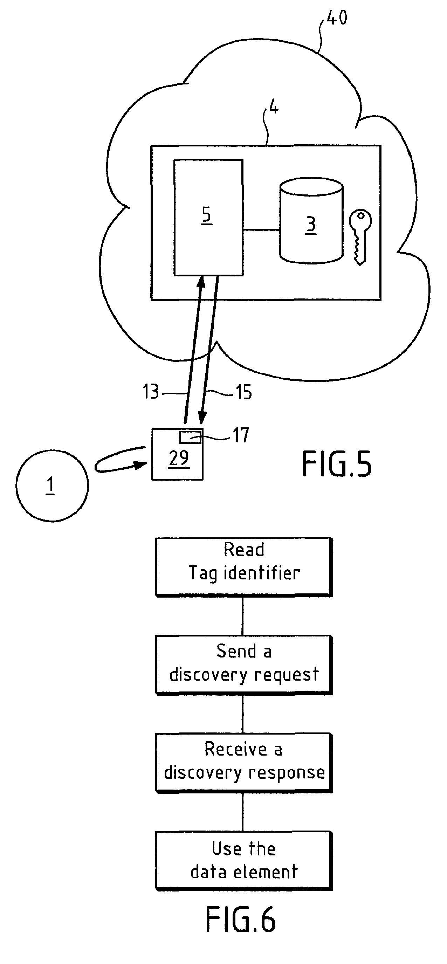

The use of the service distribution infrastructure will now be described with reference to Figure 5.

In the case wherein a communication device 29 does not comprise the application module 17 or any application module registered as a subscriber of the service. The tag 1 may comprises network address of an application server as for example NDEF records such as AAR (Android application record) or URL for downloading the application module 17 on the communication device 29.

The communication device 29 may read the tag 1 and send a request to the application server for downloading the application module 17.

The communication device 29 may also launch a default application module already installed in order to open a Web page or a WebApplication hosted by the NFC Service provider.

In the case wherein the communication device 29 comprises the application module 17, the previous described steps are not required.

The application module 17 reads the content of the memory of the tag thanks to a tag reader of the communication device 29 (not represented), in the pictured example the tag 1.

The application module 17 therefore gets the tag identifier TagID_1, the signature sig_1 and the URL of the distribution data server 4.

The application module 17 checks the validity of the tag identifier as previously described.

Then the application module 17 sends a data distribution request 13 comprising the tag identifier TagID_1 and the application module identifier AppID_1.

The data processing unit 5 of the data distribution server 4 is configured to read the application module identifier AppID_1 and to check if the application module identifier AppID_1 is stored in the distribution data repository 3.

The data processing unit 5 of the data distribution server 4 is configured to retrieve, from the distribution data repository 3, the data element associated with the application module identifier AppID_1 and the tag identifier TagID_1.

In the table pictured in Figure 7, the data element retrieved is Data element_11.

Data element_11 comprises the phone number of the deskphone on which the tag 1 is arranged.

The data processing unit 5 of the data distribution server 4 is configured to send a data distribution response 15 to the application module 17. The data distribution response 15 comprises the retrieved data element Data element_11.

The application module 17 therefore gets the data element Data element_11 and can use it as it will now be described on the example pictured on Figure 8.

**Use of the retrieved data:**

A practical use of the invention will now be described with reference to Figure 8.

A user of an initial communication device 101 wants to switch a communication session 30 between the initial communication device 101 and a phone 28.

The initial communication device 101 comprises the application module 17.

The user wants to switch the communication session 30 from the initial communication device 101 to the target communication device 105.

The user brings himself close to a target communication device 105 in order to be able to pick up the target communication device 105 when the target communication device 105 rings.

The user uses the tag reader 18 of the initial communication device 101 to read the tag 1 which is arranged on the target communication device 105.

Then, the application module 17 sends the request 15 to the distribution data server 4 as previously described and gets the required data element, which is the phone number of the target communication device 105.

The application module then launches a communication switching using the phone number of the target communication device 105.

The communication session 30 is switched and a new communication session is created between the phone 28 and the target communication device 105.

Figure 6 represents four steps of the method performed by an application module in order to get and use a data element stored in relation with a tag:

- firstly, read the tag identifier,

- secondly, send a data distribution request to the distribution data server 4,

- thirdly, receive a data distribution response comprising a data element,

- then use the data element.

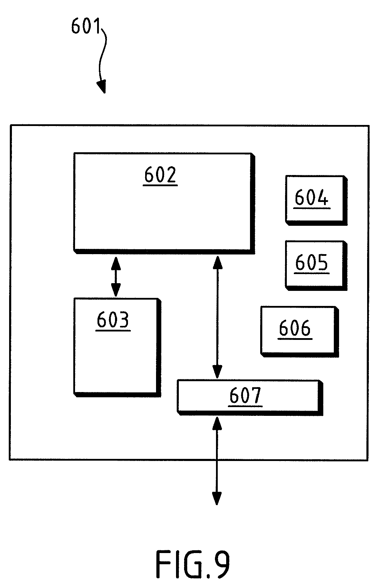

Figure 9 illustrates a computing device 601 which can be used for implementing any of the following: communication devices 19, 101, 105, 28, processing unit 5. The computing device 601 comprises a data repository 602 connected to a processing unit 603 and to a communication interface 607. For example, the data repository is a hard drive, a ROM, a RAM or other. The computing device 601 also comprises an input device 604, an output device 605 and an analog-to-digital and/or digital-to-analog converter 606. In embodiments, the input device 604 is a mouse, a joystick, a touch screen, a voice recorder etc. In embodiments, the output device 605 is a display device such as a two-dimensional screen or a three-dimensional screen. Further output devices may be employed such as a loudspeaker, or a Braille computer display, speech synthesizer etc. The communication interface 607 is connected to other devices and/or to the Internet in various manners, e.g. through a wired and/or a wireless connection, e.g. Wifi, Bluetooth, etc.

The invention is not limited to the described embodiments. The appended claims are to be construed as embodying all modification and alternative constructions that may be occurred to one skilled in the art, which fairly fall within the basic teaching here, set forth. The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software.

The registration service infrastructure, communication devices, home communication node and PBX, described hereinabove may be implemented through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, the term "hardware" should not be construed to refer exclusively to hardware capable of executing software, and may include, without limitation, central processing unit (CPU), digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included. The registration service infrastructure described hereinabove may be implemented in a unitary manner or in a distributed manner.

In the claims, any reference signs placed between parentheses shall not be construed as limiting the scope of the claims.

**Claims**

1. A service distribution infrastructure comprising:

   - a plurality of tags (1), each tag of the plurality comprising a tag identifier (2) and a logical network address of a distribution data repository (3), each tag (1) being able to produce an identification tag signal comprising the tag identifier (1) and the logical network address of a distribution data repository (3),
   - a data distribution server (4) comprising:

     o a data processing unit (5),
     o a network interface, and
     o the distribution data repository (3), wherein the distribution data repository stores a plurality of tag identifiers (2) and a plurality of application module identifiers (6),

   the distribution data repository (3) further storing data elements (7), each data element being stored in association with a tag identifier (2) and an application module identifier (6),
   a first data element (8) being stored in association with a tag identifier (10) and a first application module identifier (11), and
   a second data element (9) being stored in association with the tag identifier (10) and a second application module identifier (12),
   the network interface being configured to receive a data distribution request (13) from a requesting communication device (19), wherein the data distribution request (13) comprises a tag identifier (10) and an module identifier (11),
   wherein the data processing unit (5) is configured to retrieve a data element (8) as a function of the application module identifier (11) and tag identifier (10) in response to receiving the data distribution response,
   the network interface being further configured to send a data distribution response (15) to the requesting communication device (19), wherein the data distribution response (13) comprises the retrieved data element (8),
   such that the requesting communication device (19) gets the data element (8) to be processed,
   wherein the data processing unit (5) is configured to retrieve the first data element (8) in response to receiving a data distribution request comprising the tag identifier (10) and the first application module identifier (11),
   the data processing unit (5) is configured to retrieve the second data element (9) in response to receiving a data distribution request comprising the tag identifier (10) and the second application module identifier (12)

2. A service distribution infrastructure according to claim 1, wherein the data processing unit (5) is further configured to receive a registration request (20) from a registering application module through the network interface, the data processing unit being configured to:

   - generate an application module identifier (11, 12) associated with the registering application module,
   - send the application module identifier to the registering application module,
   - receive a storing request (22), the storing request comprising a tag identifier, the storing request further comprising the application module identifier and a data element to be stored in relation with the tag identifier (10) and the application module identifier,
   - store into the distribution data repository (3) the data element (8) in relation with the tag identifier and the application module identifier.

3. A service distribution infrastructure according to claim 1, further comprising a tag registration module configured to receive a tag registration request from a deployment device, wherein the tag registration request comprises a tag identity, the data registration module being configured to:

- generate a signature associated with the tag identity,
- send a tag registration response to the deployment device, wherein the tag registration response comprises the generated signature,
- store in the service distribution infrastructure the tag identity in association with the generated signature.

4. A service distribution infrastructure according to claim 1, further comprising a tag registration module configured to receive a tag registration request from a deployment device, wherein the tag registration request comprises a tag identity, the data registration module being configured to:

- generate a signature associated with the tag identity,
- send a tag registration response to the deployment device, wherein the tag registration response comprises the generated signature,
- store in the service distribution infrastructure the tag identity in association with the generated signature,
the service distribution infrastructure further comprising a deployment device (13), the deployment device (13) comprising a tag identifier discovery module configured for discovering a tag identifier of a tag to be deployed, the deployment device being further configured for:
- sending the tag registration request to the tag registration module and receiving the tag registration response,
- storing the generated signature in a digital memory of the tag to be deployed.

5. A service distribution infrastructure according to claim 1, wherein the tag is a NFC tag comprising:

- a digital memory containing the tag identifier, a signature of the tag identifier and a network address of the service distribution infrastructure,
- an infrared or radio transmitter adapted to emit an infrared or radio identification tag signal carrying the tag identifier and the signature stored in the digital memory.

6. A service distribution infrastructure according to claim 3, wherein the distribution data repository (3) further stores a public key (16) adapted to check the validity of the signature of the tag identifier (10) and the integrity of the data element (8) stored in the tag.

7. A service distribution infrastructure according to claim 1, wherein the data element (8) comprises a network address of a target communication device (105) and the registered application module identifier (11) identifies an application module (17) configured to switch a communication session (30) which is previously established between the requesting communication device (101) and a third party communication device (28) from the requesting communication device (101) to the target communication device (105) such that the switched communication session (31) is established between the third party communication device (28) and the target communication device (105).

8. A service distribution infrastructure according to claim 2, wherein the tag comprises the tag identifier and a signature of the tag identifier, and the distribution data repository (3) further stores a public key (16) adapted to check the validity of the signature of the tag identifier (10), and the data processing unit (5) is further configured to send the public key (16) to the registering application module (17).

9. A service distribution infrastructure according to claim 1, wherein signature of the tag identifier is the result of a cryptographic function and a private key applied on the tag identifier.

10. A communication system comprising the service distribution infrastructure according to claim 1 and a communication device comprising:

a tag reader (18) configured to:

- read an identification tag signal comprising an identity of a tag (1),

an application module (17) comprising:

- a memory in which is stored an application module identifier,
- a data processing unit,

a data distribution module configured to:

- send a data distribution request (15) to the registration service infrastructure (4), wherein the data distribution request comprises the identity of the tag and the application module identifier,
- receive a data distribution response (13) from the registration service infrastructure, the data distribution response comprising a data element in relation with the identity of the tag and the application module identifier,

the data processing unit being configured to process the data element (8), wherein the data distribution module of the communication device and the network interface of the service distribution infrastructure are configured to communicate with each other.

11. A communication system according to claim 10, wherein the application module is a first application module (17), and the application module identifier is the first application module identifier (11), the data processing unit is a first data processing unit, the data distribution request (15) is a first data distribution request and the data distribution response is a first data distribution response, the communication device further comprising:

a second application module comprising:

- a memory in which is stored the second application module identifier (12),
- a second data processing unit,

the data distribution module being further configured to:

- send a second data distribution request to the registration service infrastructure, wherein the data distribution request comprises the identity of the tag and the second application module identifier,
- receive a second data distribution response from the registration service infrastructure, the data distribution response comprising a second data element in relation with the identity of the tag and the second application module identifier,

the second data processing unit being configured to process the second data element (9).

12. A communication system according to claim 10, wherein the communication device is the requesting communication device (101), wherein the first data element (8) being stored in association with the tag identifier (10) and with the first application module identifier (11) comprises the network address of a target communication device (105), and the first application module is configured to switch an communication session (30) which is previously established between the requesting communication device (101) and a third party communication device from the requesting communication device (101) to the target communication device (105) such that the switched communication session (31) is established between the third party communication device (28) and the target communication device (105), wherein the tag (1) is located in, on or at a short distance from the target communication device (105).

13. A communication system according to claim 10, wherein the communication device (101) further comprises

- applying a cryptographic function on the signature of the tag in order to get a calculated encrypted signature,
- comparing the calculated encrypted signature to the identity of the tag in order to sending the data distribution request to the service distribution infrastructure for getting the data element.

14. A communication system according to claim 10, wherein the tag signal further comprises a network address of a web server in which is stored program instructions of an application module, the communication device further comprising a memory, and processing means, the communication device (101) being further configured to:

- send a request to the web server for receiving the program instructions,
- receive the program instructions from the server,
- store in the memory the program instructions in order that the communication device comprises the application module (17),
- execute, by the processing means, the program instructions of the application module.

**Amended claims in accordance with Rule 137(2) EPC.**

1. A service distribution infrastructure comprising:

- a plurality of tags (1), each tag of the plurality comprising a tag identifier (2) and a logical network address of a distribution data repository (3), each tag (1) being able to produce an identification tag signal comprising the tag identifier (1) and the logical network address of a distribution data repository (3),
- a data distribution server (4) comprising:

  o a data processing unit (5),
  o a network interface, and
  o the distribution data repository (3), wherein the distribution data repository stores a plurality of tag identifiers (2) and a plurality of application module identifiers (6),

the distribution data repository (3) further storing data elements (7), each data element being stored in association with a tag identifier (2) and an application module identifier (6),

a first data element (8) being stored in association with a tag identifier (10) and a first application module identifier (11), and

a second data element (9) being stored in association with the tag identifier (10) and a second application module identifier (12),

the network interface being configured to receive a data distribution request (13) from a requesting communication device (19), wherein the data distribution request (13) comprises a tag identifier (10) and an application module identifier (11), wherein the data processing unit (5) is configured to:

> - retrieve the first data element (8) in response to receiving a data distribution request comprising the tag identifier (10) and the first application module identifier (11), and
> - to retrieve the second data element (9) in response to receiving a data distribution request comprising the tag identifier (10) and the second application module identifier (12),

the network interface being further configured to send a data distribution response (15) to the requesting communication device (19), wherein the data distribution response (15) comprises the retrieved data element (8),

such that the requesting communication device (19) gets the data element (8) to be processed, and wherein:

> - the data element (8) comprises a network address of a target communication device (105), and
> - the registered application module identifier (11) identifies an application module (17) configured to switch a communication session (30) established between the requesting communication device (19) and a third party communication device (28), to a communication session (31) between the target communication device (105) and the third party communication device (28).

2. A service distribution infrastructure according to claim 1, wherein the data processing unit (5) is further configured to receive a registration request (20) from a registering application module through the network interface, the data processing unit being configured to:

> - generate an application module identifier (11, 12) associated with the registering application module,
> - send the application module identifier to the registering application module,
> - receive a storing request (22), the storing request comprising a tag identifier, the storing request further comprising the application module identifier and a data element to be stored in relation with the tag identifier (10) and the application module identifier,

> - store into the distribution data repository (3) the data element (8) in relation with the tag identifier and the application module identifier.

3. A service distribution infrastructure according to claim 1, further comprising a tag registration module configured to receive a tag registration request from a deployment device, wherein the tag registration request comprises a tag identity, the data registration module being configured to:

> - generate a signature associated with the tag identity,
> - send a tag registration response to the deployment device, wherein the tag registration response comprises the generated signature,
> - store in the service distribution infrastructure the tag identity in association with the generated signature.

4. A service distribution infrastructure according to claim 1, further comprising a tag registration module configured to receive a tag registration request from a deployment device, wherein the tag registration request comprises a tag identity, the data registration module being configured to:

> - generate a signature associated with the tag identity,
> - send a tag registration response to the deployment device, wherein the tag registration response comprises the generated signature,
> - store in the service distribution infrastructure the tag identity in association with the generated signature,

the service distribution infrastructure further comprising a deployment device (13), the deployment device (13) comprising a tag identifier discovery module configured for discovering a tag identifier of a tag to be deployed, the deployment device being further configured for:

> - sending the tag registration request to the tag registration module and receiving the tag registration response,
> - storing the generated signature in a digital memory of the tag to be deployed.

5. A service distribution infrastructure according to claim 1, wherein the tag is a NFC tag comprising:

> - a digital memory containing the tag identifier, a signature of the tag identifier and a network address of the service distribution infrastructure,
- an infrared or radio transmitter adapted to emit an infrared or radio identification tag signal carrying the tag identifier and the signature stored in the digital memory.

6. A service distribution infrastructure according to claim 3, wherein the distribution data repository (3) further stores a public key (16) adapted to check the validity of the signature of the tag identifier (10) and the integrity of the data element (8) stored in the tag.

7. A service distribution infrastructure according to claim 2, wherein the tag comprises the tag identifier and a signature of the tag identifier, and the distribution data repository (3) further stores a public key (16) adapted to check the validity of the signature of the tag identifier (10), and the data processing unit (5) is further configured to send the public key (16) to the registering application module (17).

8. A service distribution infrastructure according to claim 1, wherein signature of the tag identifier is the result of a cryptographic function and a private key applied on the tag identifier.

9. A communication system comprising the service distribution infrastructure according to claim 1 and a communication device comprising:

  a tag reader (18) configured to:

    - read an identification tag signal comprising an identity of a tag (1), an application module (17) comprising:
    - a memory in which is stored an application module identifier,
    - a data processing unit,

  a data distribution module configured to:

    - send a data distribution request (15) to the registration service infrastructure (4), wherein the data distribution request comprises the identity of the tag and the application module identifier,
    - receive a data distribution response (13) from the registration service infrastructure, the data distribution response comprising a data element in relation with the identity of the tag and the application module identifier,

  the data processing unit being configured to process the data element (8), wherein the data distribution module of the communication device and the network interface of the service distribution infrastructure are configured to communicate with each other.

10. A communication system according to claim 9, wherein the application module is a first application module (17), and the application module identifier is the first application module identifier (11), the data processing unit is a first data processing unit, the data distribution request (15) is a first data distribution request and the data distribution response is a first data distribution response, the communication device further comprising:

  a second application module comprising:

    - a memory in which is stored the second application module identifier (12),
    - a second data processing unit,

  the data distribution module being further configured to:

    - send a second data distribution request to the registration service infrastructure, wherein the data distribution request comprises the identity of the tag and the second application module identifier,
    - receive a second data distribution response from the registration service infrastructure, the data distribution response comprising a second data element in relation with the identity of the tag and the second application module identifier,

  the second data processing unit being configured to process the second data element (9).

11. A communication system according to claim 9, wherein the communication device is the requesting communication device (101), wherein the first data element (8) being stored in association with the tag identifier (10) and with the first application module identifier (11) comprises the network address of a target communication device (105), and the first application module is configured to switch an communication session (30) which is previously established between the requesting communication device (101) and a third party communication device from the requesting communication device (101) to the target communication device (105) such that the switched communication session (31) is established between the third party communication device (28) and the target communication device (105), wherein the tag (1) is located in, on or at a short distance from the target communication device (105).

12. A communication system according to claim 9, wherein the communication device (101) further comprises

- applying a cryptographic function on the signature of the tag in order to get a calculated encrypted signature,
- comparing the calculated encrypted signature to the identity of the tag in order to sending the data distribution request to the service distribution infrastructure for getting the data element.

**13.** A communication system according to claim 9, wherein the tag signal further comprises a network address of a web server in which is stored program instructions of an application module, the communication device further comprising a memory, and processing means,
the communication device (101) being further configured to:

- send a request to the web server for receiving the program instructions,
- receive the program instructions from the server,
- store in the memory the program instructions in order that the communication device comprises the application module (17),
- execute, by the processing means, the program instructions of the application module.

FIG.1

FIG.2

FIG.3

FIG.4

FIG.5

FIG.6

| App-ID / Tag-ID | App-ID1 | App-ID2 | --- App-IDj |
|---|---|---|---|
| Tag-ID1 | Data element 11 | Data element 12 | ∅ |
| Tag-ID2 | Data element 21 | Data element 22 | Data element 2j |
| Tag-IDk | | | Data element kj |

## FIG.7

## FIG.8

601

602

604

605

603

606

607

FIG.9

Europäisches
Patentamt

European
Patent Office

Office européen
des brevets

# EUROPEAN SEARCH REPORT

Application Number

EP 16 18 9605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 821 932 A1 (OXHALE HOLDING B V [NL]) 7 January 2015 (2015-01-07) * abstract * * paragraph [0012] - paragraph [0023] * * paragraph [0038] - paragraph [0045]; figures 1-3 * * paragraph [0049] - paragraph [0050] * | 1-14 | INV. G06F17/30 |
| X | US 2011/314092 A1 (LUNT ERIC M [US] ET AL) 22 December 2011 (2011-12-22) * abstract * * paragraph [0066] - paragraph [0084]; figures 3-14 * | 1-14 | |
| A | US 2012/129452 A1 (KOH LIANG SENG [US] ET AL) 24 May 2012 (2012-05-24) * abstract * * paragraph [0050] - paragraph [0065]; figure 1 * * paragraph [0121] - paragraph [0131]; figure 3C * | 3,4,6,8, 9,13 | |

TECHNICAL FIELDS
SEARCHED        (IPC)

G06F

The present search report has been drawn up for all claims

| Place of search | Date of completion of the search | Examiner |
|---|---|---|
| Berlin | 22 March 2017 | Barieux, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 18 9605

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2017

| Patent document cited in search report | | Publication date | Patent family member(s) | | Publication date |
|---|---|---|---|---|---|
| EP 2821932 | A1 | 07-01-2015 | EP 2821932 A1 | | 07-01-2015 |
| | | | NL 2011097 C | | 06-01-2015 |
| | | | US 2015012976 A1 | | 08-01-2015 |
| US 2011314092 | A1 | 22-12-2011 | EP 2583197 A1 | | 24-04-2013 |
| | | | JP 5969470 B2 | | 17-08-2016 |
| | | | JP 2013535059 A | | 09-09-2013 |
| | | | US 2011314092 A1 | | 22-12-2011 |
| | | | US 2013346488 A1 | | 26-12-2013 |
| | | | US 2014372572 A1 | | 18-12-2014 |
| | | | WO 2011159932 A1 | | 22-12-2011 |
| US 2012129452 | A1 | 24-05-2012 | NONE | | |

EPO FORM P0459

For more details about this annex : see Official Journal of the European Patent Office, No. 12/82